(19) Europäisches Patentamt
European Patent Office
Office européen des brevets

(11) Veröffentlichungsnummer: **0 022 076**
**B1**

# (12) EUROPÄISCHE PATENTSCHRIFT

(45) Veröffentlichungstag der Patentschrift: **27.07.83**

(51) Int. Cl.[3]: **C 09 B 29/33,** C 09 B 56/00, C 09 B 57/04, C 08 K 5/23

(21) Anmeldenummer: **80810198.4**

(22) Anmeldetag: **13.06.80**

(54) **Iminoisoindolinonfarbstoffe, Verfahren zu deren Herstellung und deren Verwendung.**

(30) Priorität: **19.06.79 CH 5709/79**

(43) Veröffentlichungstag der Anmeldung: **07.01.81 Patentblatt 81/1**

(45) Bekanntmachung des Hinweises auf die Patenterteilung: **27.07.83 Patentblatt 83/30**

(84) Benannte Vertragsstaaten: **CH DE FR GB IT LI**

(56) Entgegenhaltungen:
**US-A-3 963 694**
**CHEMICAL ABSTRACTS, Band 91, Nr. 8, 20. August 1979, Zusammenfassung Nr. 58690v, Seite 87, Columbus, Ohio, US**

(73) Patentinhaber: **CIBA-GEIGY AG, Patentabteilung Postfach, CH-4002 Basel (CH)**

(72) Erfinder: **Model, Ernst, Dr., Blotzheimerstrasse 69, CH-4055 Basel (CH)**

**EP 0 022 076 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Iminoisoindolinonfarbstoffe, Verfahren zu deren Herstellung und deren Verwendung

In der japanischen Patentschrift 54-30 221 werden Azopigmente beschrieben, die man durch Kupplung von diazotierten 3-[4-Aminophenyl)imino]-4,5,6,7-tetrachlor-1-oxoisoindolinen mit Acetoacetaniliden erhält.

Die Erfindung betrifft neue Iminoisoindilinonfarbstoffe der Formel

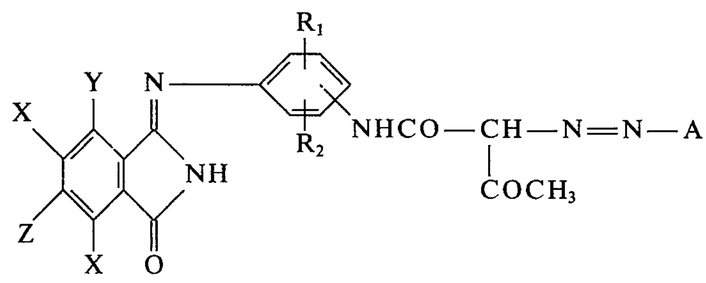

(1)

worin X Halogen, Y und Z Halogen, Alkoxy, enthaltend 1—4 C-Atome, oder Aryloxy, $R_1$ und $R_2$ Wasserstoff, Halogen, Alkyl, enthaltend 1—2 C-Atome, oder Alkoxy, enthaltend 1—2 C-Atome, und A Phenyl bedeuten, welches durch Halogen, Trifluormethyl, Alkyl, enthaltend 1—2 C-Atome, Alkoxy, enthaltend 1—2 C-Atome, oder eine Gruppe der Formel

$$-CONHR_3 \text{ oder } -NHCOR_4$$

substituiert sein kann, worin $R_3$ Wasserstoff, Alkyl, enthaltend 1—2 C-Atome, oder gegebenenfalls durch Halogen, Methyl, Methoxy oder Trifluormethyl substituiertes Phenyl und $R_4$ gegebenenfalls durch Halogen, Methyl oder Methoxy substituiertes Phenyl oder Alkyl, enthaltend 1 oder 2 C-Atome, bedeuten, oder A einen heterocyclischen Rest darstellt.

Von besonderem Interesse sind Farbstoffe der Formel

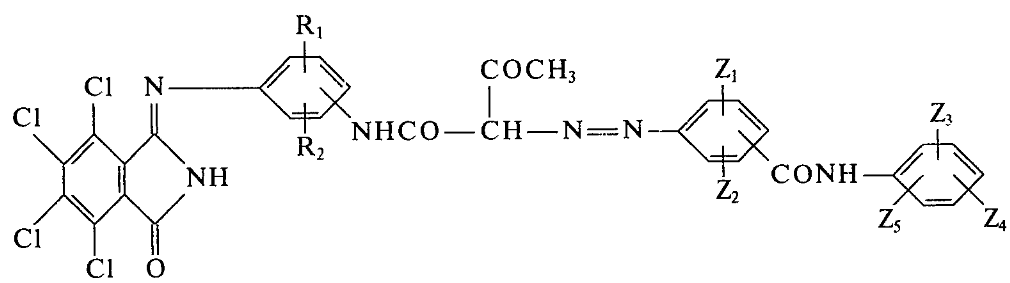

(2)

worin $R_1$ und $R_2$ die oben angegebene Bedeutung haben und $Z_1$ bis $Z_5$ Wasserstoff, Halogen oder Methyl bedeuten, einer der Substituenten $Z_1$ und $Z_2$ auch Methoxy und höchstens zwei der Substituenten $Z_3$—$Z_5$ Trifluormethyl oder Methoxy sein können, und insbesondere solche der Formel

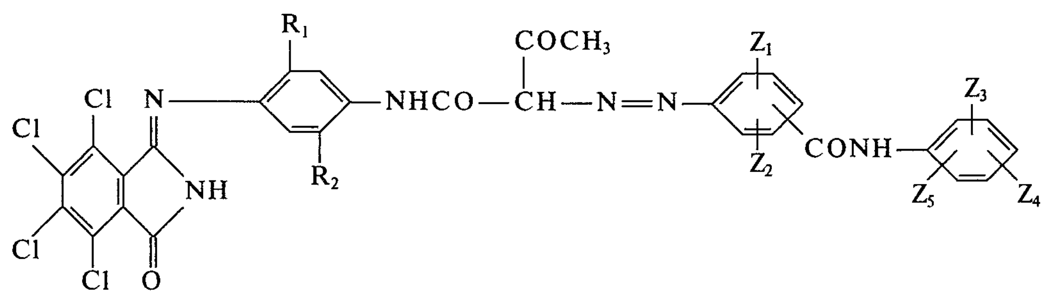

(3)

worin $R_1$, $R_2$ und $Z_1$ bis $Z_5$ die oben angegebene Bedeutung haben.

Ebenfalls von Interesse sind Farbstoffe der Formel

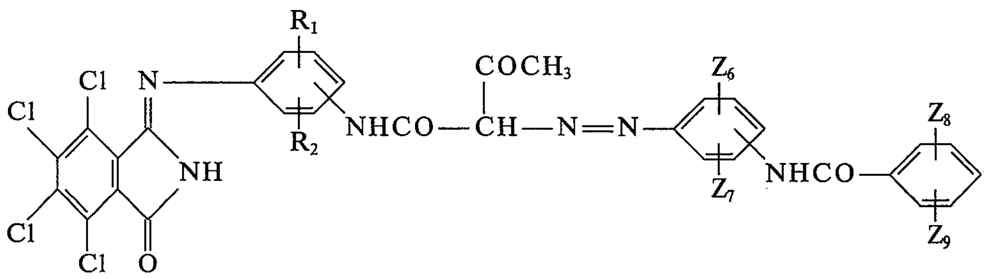

(4)

worin $R_1$ und $R_2$ die oben angegebene Bedeutung haben, $Z_6$ und $Z_7$ Wasserstoff, Halogen, Alkyl, enthaltend 1–2 C-Atome, oder Alkoxy, enthaltend 1–2 C-Atome, und $Z_8$ und $Z_9$ Wasserstoff, Halogen, Methyl oder Methoxy bedeuten, und insbesondere solche der Formel

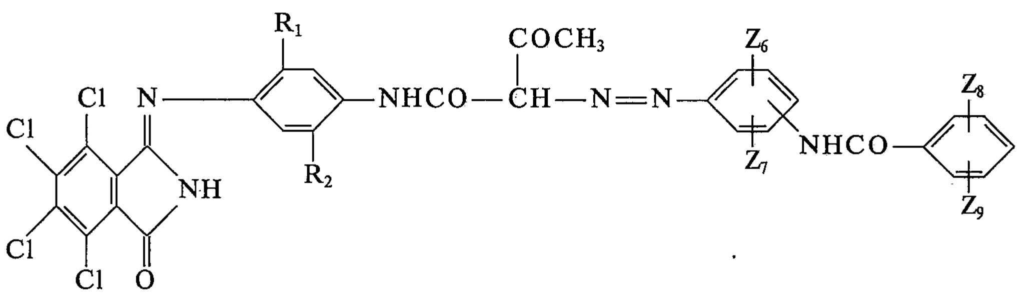

(5)

worin $R_1$, $R_2$ und $Z_6$ bis $Z_9$ die oben angegebene Bedeutung haben.

Von Interesse sind außerdem Farbstoffe der Formel

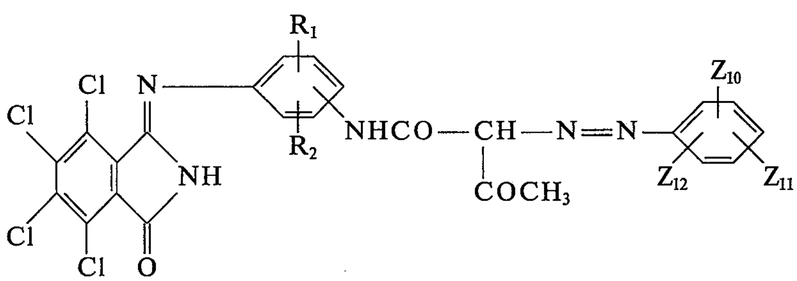

(6)

worin $R_1$ und $R_2$ die oben angegebene Bedeutung haben und $Z_{10}$ bis $Z_{12}$ Wasserstoff, Halogen, Methyl, Trifluormethyl oder Methoxy bedeuten, wobei höchstens zwei der Substituenten $Z_{10}$ bis $Z_{12}$ Trifluormethyl oder Methoxy sein können, und insbesondere solche der Formel (7)

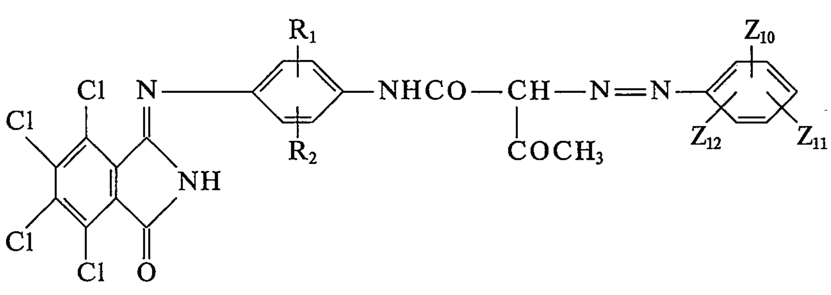

(7)

worin $R_1$, $R_2$ und $Z_{10}$ bis $Z_{12}$ die oben angegebene Bedeutung haben.

In den Formeln 1 bis 4 bedeutet Halogen Brom oder insbesondere Chlor.

Für A als heterocyclischer Rest kommen vor allem Benzimidazolon, insbesondere N-Methyl-, Chlor-, Methyl- oder Methoxybenzimidazolon, sowie Phenmorpholon, wie 6-Methylphenmorpholon, Chinazolin, beispielsweise 2,4-Dihydroxy-1,3-chinazolin, Chinolon, zum Beispiel 4-Methylchinolon, oder Chinazolon in Frage.

Zu den neuen Farbstoffen gelangt man, wenn man ein Mol eines Isoindolins der Formel

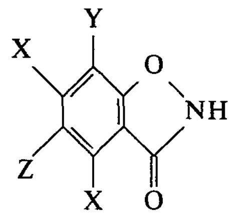

(8)

worin X, Y und Z die oben angegebene Bedeutung haben und Q eine Gruppe der Formel

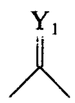

oder

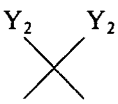

bedeutet, worin $Y_1$ für eine Imino- oder Thiogruppe und $Y_2$ für Halogen, Alkoxy, enthaltend 1—4 C-Atome, oder eine sekundäre Aminogruppe stehen, mit einem Mol der Formel

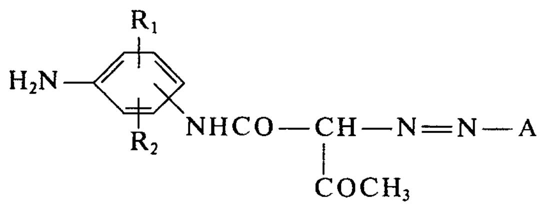

(9)

worin $R_1$, $R_2$ und A die oben angegebene Bedeutung haben, kondensiert.

Als Ausgangsstoffe verwendet man vorzugsweise Isoindolinone der Formel

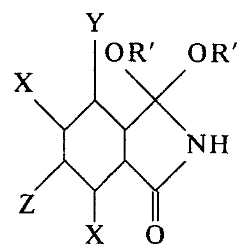

(10)

worin die R' Alkyl, enthaltend 1—4 C-Atome, bedeuten und X, Y und Z die angegebene Bedeutung haben.

Insbesondere geht man von Isoindolinonen der Formel 10 aus, worin X, Y und Z Chlor bedeuten.

Als Beispiele für Ausgangsstoffe der Formel 10 seien genannt:

3-Imino-4,5,6,7-tetrachlor-isoindolinon
3-Imino-5,7-dichlor-4,6-dimethoxy-isoindolinon
3,3,4,5,6,7-Hexachlor-isoindolinon
3,3-Dimethoxy-5,7-dichlor-4,6-dimethoxy-isoindolinon
3,3-Dimethoxy-4,5,7-trichlor-6-methoxy-isoindolinon
3,3-Dimethoxy-4,5,6,7-tetrachlor-isoindolinon
3,3-Dimethoxy-4,5,6,7-tetrabrom-isoindolinon
3,3-Dimethoxy-4,5,7-trichlor-6-äthoxy-isoindolinon
3,3-Dimethoxy-4,5,7-trichlor-6-n-propoxy-isoindolinon
3,3-Dimethoxy-4,5,7-trichlor-6-n-butoxy-isoindolinon
3,3-Dimethoxy-4,5,7-trichlor-6-phenoxy-isoindolinon

Es handelt sich um bekannte Verbindungen oder um nach bekannten Verfahren herstellbare Verbindungen.

Die erwähnten Isoindilinone sind mit den Aminen der Formel 9 zu kondensieren. Als Beispiele seien die folgenden Amine genannt:

2-Chlor-5-(2′,4′,5′-trichlorphenylcarbamoyl)-phenyl-azo-acetoacetyl-p-aminoanilid
2-Chlor-5-(2′,4′-dichlorphenylcarbamoyl)-phenyl-azo-acetoacetyl-p-aminoanilid
2-Chlor-5-(3′,4′-dichlorphenylcarbamoyl)-phenyl-azo-acetoacetyl-p-aminoanilid
2-Chlor-5-(2′,4′-dichlorphenylcarbamoyl)-phenyl-azo-acetoacetyl-o-methoxy-p-aminoanilid
4-Phenylcarbamoyl-phenyl-azo-acetoacetyl-p-aminoanilid
2-Chlor-5-(2′,4′,5′-trichlorphenylcarbamoyl)-phenyl-azo-acetoacetyl-m-aminoanilid
Benzimidazol-5-yl-azo-acetoacetyl-p-aminoanilid
3-(4′-Chlorbenzoylamido)-phenyl-azo-acetoacetyl-p-aminoanilid
4-(4′-Chlorbenzoylamido)-phenyl-azo-acetoacetyl-p-aminoanilid
4-Acetylamido-phenyl-azo-acetoacetyl-p-aminoanilid
3-Acetylamido-phenyl-azo-acetoacetyl-p-aminoanilid
3,4-Dichlorphenyl-azo-acetoacetyl-p-aminoanilid
4-Chlorphenyl-azo-acetoacetyl-p-aminoanilid

Die erwähnten Amine sind bekannt oder können nach bekannten Methoden, beispielsweise durch Diazotierung eines Amins der Formel $ANH_2$ und Kupplung mit einem Acetoacetylnitroanilin und Reduktion der Nitrogruppe im erhaltenen Azofarbstoff, erhalten werden.

Geht man bei der Herstellung der Farbstoffe der Formel 1 von 3-Imino-, 3-Thio- oder 3,3-Bis-sek.-amino-4,5,6,7-tetrachlorisoindolin-1-onen oder von Alkalisalzen der 3,3-Dialkoxy-4,5,6,7-tetrachlorisoindolin-1-onen aus. so verwendet man vorteilhaft mit Wasser mischbare organische Lösungsmittel, z. B. niederaliphatische Alkohole, wie niedere Alkanole, beispielsweise Methanol, Isopropanol oder Butanol, niedere aliphatische Ketone, wie Aceton. Die Kondensation erfolgt hierbei schon bei verhältnismäßig tiefen Temperaturen. Vorteilhaft arbeitet man in Gegenwart basenbindender Mittel; als solche sind beispielsweise niedere Fettsäuren, die dann gleichzeitig als Lösungsmittel dienen, insbesondere Essigsäure, zu erwähnen.

Bei Verwendung von 3,3-Dihalogen-4,5,6,7-tetrachlorisoindolin-1-onen bevorzugt man hydroxylgruppenfreie organische Lösungsmittel, wie Kohlenwasserstoffe, z. B. aromatische, wie Benzol, Toluol, Xylol, Tetrahydronaphthalin oder Diphenyl oder cycloaliphatische, z. B. Cyclohexan, dann auch Halogenkohlenwasserstoffe, wie aliphatische, z. B. Tetrachlorkohlenstoff oder Tetrachloräthylen, oder aromatische, wie Chlorbenzol oder Di- und Trichlorbenzole, ferner aromatische Nitrokohlenwasserstoffe, wie Nitrobenzole, Äther, und zwar aliphatische, wie Dibutyläther, aromatische wie Diphenyläther, oder cyclische Äther wie Dioxan, ferner Ketone, wie Aceton, oder Ester, namentlich Ester niederer Fettsäuren mit niederen Alkanolen, wie Essigsäureäthylester in Gegenwart säurebindender Mittel.

Die Farbstoffe der Formel 1 kann man auch erhalten, indem man ein Mol eines Amins der Formel

$$ANH_2 \qquad (11)$$

diazotiert und mit einem Mol einer Verbindung der Formel

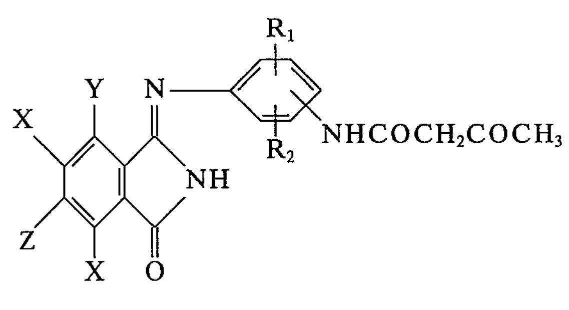

(12)

worin A, X, Y, Z, $R_1$ und $R_2$ die oben angegebene Bedeutung haben, kuppelt.

Die neuen Pigmente fallen unmittelbar nach ihrer Bildung aus dem Reaktionsmedium aus. Sie sind für gewisse Zwecke als Rohpigmente direkt verwendbar; sie können aber auch nach an sich bekannten Methoden, beispielsweise durch Extrahieren mit organischen Lösungsmitteln oder durch Mahlen mit nachher wieder entfernbaren Mahlhilfsmitteln, z. B. Salzen oder durch alkalische Umfällung, in ihren Eigenschaften, besonders bezüglich Reinheit, Form und Deckkraft, noch verbessert werden.

Die neuen Farbstoffe stellen wertvolle Pigmente dar, welche in feinverteilter Form zum Pigmentieren von hochmolekularem organischem Material verwendet werden können, z. B. Celluloseäthern und -estern, wie Äthylcellulose, Acetylcellulose, Nitrocellulose, Polyamiden bzw. Polyurethanen oder Polyestern, natürlichen Harzen oder Kunstharzen, z. B. Aminoplasten, insbesondere Harnstoff- und Melamin-Formaldehydharzen, Alkydharzen, Phenolplasten, Polycarbonaten, Polyolefinen, wie Polystyrol, Polyvinylchlorid, Polyäthylen, Polypropylen, Polyacrylnitril, Polyacrylsäureester, thermoplastische oder härtbare Acrylharze, Gummi, Casein, Silikon und Silikonharzen, einzeln oder in

Mischungen. Dabei spielt es keine Rolle, ob die erwähnten hochmolekularen Verbindungen als plastische Massen, Schmelzen oder in Form von Spinnlösungen, Lacken oder Druckfarben vorliegen. Je nach Verwendungszweck erweist es sich als vorteilhaft, die neuen Pigmente als Toner oder in Form von Präparaten zu verwenden.

Die erhaltenen Färbungen zeichnen sich durch große Farbstärke, hohe Farbtonreinheit, gute Überlackier-, Migrations-, Hitze-, Licht- und Wetterechtheit aus.

In den nachfolgenden Beispielen bedeuten die Prozente Gewichtsprozente, und die Temperaturen sind in Celsiusgraden angegeben.

## Beispiel 1

13 g 3,4,5,6-Tetrachlor-o-cyanbenzoesäure-methylester werden mit 43,2 ml einer 1 n-Natriummethylatlösung in Methanol zu einer klaren Lösung verrührt. Es entsteht das Natriumsalz des 3,3-Dimethoxy-4,5,6,7-tetrachlorisoindolin-1-ons. Unter gutem Rühren werden nun 19,4 g 2-Chlor-5-(2',4'-dichlorphenylcarbamoyl)-phenyl-azo-acetoacetyl-p-aminoanilid (fein gemahlen und gesiebt), 150 ml o-Dichlorbenzol und 25 ml Dimethylformamid eingetragen. Bei einer Badtemperatur von 120° wird die Innentemperatur unter Abdestillieren von Methanol innert ca. 1 Std. auf 100° erhöht, wobei sich, ohne daß eine klare Lösung entstanden ist, das Natriumsalz des Pigments abscheidet. Es wird mit weiteren 100 ml o-Dichlorbenzol verrührt und 3 Std. bei 100° gehalten. Nun wird mit 15 ml Eisessig angesäuert und die Temperatur auf 140—150° erhöht und während 2 Stunden unter gutem Rühren gehalten. Das unlösliche Pigment wird bei 120° abfiltriert und mit Methanol, Aceton und Wasser gewaschen. Nach dem Trocknen erhält man 26,3 g eines farbstarken Gelbpigments, das in dieser Form oder nach einer der üblichen Methoden gemahlen zur Färbung von Kunststoffen und zur Herstellung von Druckpasten und Farblacken verwendet werden kann. Die erhaltenen Gelbfärbungen zeichnen sich durch hervorragende Echtheiten aus.

In den nachfolgenden Beispielen 2 bis 44 wird das in Beispiel 1 verwendete 2-Chlor-5-(2',4'-dichlorphenylcarbamoyl)-phenyl-azo-acetoacetoacetyl-p-aminoanilid durch Verbindungen der allgemeinen Formel

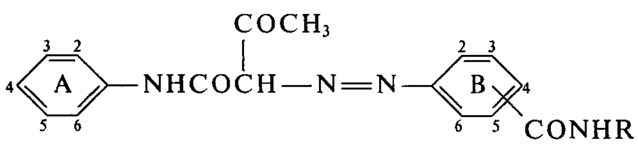

ersetzt.

| Nr. | A | B | R | Nuance |
|---|---|---|---|---|
| 2 | 4-$NH_2$-2-Cl– | 4-CONH– | H | gelb |
| 3 | 4-$NH_2$– | 4-CONH– | $CH_3$ | gelb |
| 4 | 4-$NH_2$-2-Cl | 4-CONH– | $CH_3$ | gelb |
| 5 | 3-$NH_2$– | 4-CONH– | 3,4-Di-Cl-phenyl– | grünstichig gelb |
| 6 | 3-$NH_2$– | 3-CONH-4-Cl– | 2,4-Di-Cl-phenyl– | grünstichig gelb |
| 7 | 3-$NH_2$– | 3-CONH-4-Cl– | 3,4-Di-Cl-phenyl– | grünstichig gelb |
| 8 | 3-$NH_2$– | 3-CONH-4-Cl– | 2,4,5-Tri-Cl-phenyl | grünstichig gelb |
| 9 | 3-$NH_2$– | 3-CONH-4-Cl– | 2-$CH_3$-5-Cl-phenyl– | grünstichig gelb |
| 10 | 3-$NH_2$– | 3-$CH_3$-4-CONH– | 4-Cl-phenyl | grünstichig gelb |
| 11 | 3-$NH_2$-6-Cl | 3-CONH-4-Cl– | 2,4-Di-Cl-phenyl– | grünstichig gelb |
| 12 | 3-$NH_2$-6-$CH_3$ | 4-Cl-3-CONH– | 2,4-Di-Cl-phenyl– | gelb |
| 13 | 4-$NH_2$– | 4-CONH– | 3,4-Di-Cl-phenyl– | grünstichig gelb |
| 14 | 4-$NH_2$– | 4-Cl-3-CONH– | 3,4-Di-Cl-phenyl– | grünstichig gelb |

Fortsetzung

| Nr. | A | B | R | Nuance |
|---|---|---|---|---|
| 15 | 4-$NH_2$– | 4-Cl-3-CONH– | 2,4,5-Tri-Cl-phenyl– | gelb |
| 16 | 4-$NH_2$– | 4-Cl-3-CONH | 2-$CH_3$-3-Cl-phenyl– | gelb |
| 17 | 4-$NH_2$– | 4-Cl-3-CONH– | 2-$CH_3$-5-Cl-phenyl– | gelb |
| 18 | 4-$NH_2$- | 3-$CH_3$-4-CONH– | 4-Cl-phenyl– | grünstichig gelb |
| 19 | 4-$NH_2$-2-Cl | 4-CONH– | 3,4-Di-Cl-phenyl– | gelb |
| 20 | 4-$NH_2$-2-Cl | 4-Cl-3-CONH– | 2,4-Di-Cl-phenyl– | gelb |
| 21 | 4-$NH_2$-2-Cl | 4-Cl-3-CONH– | 3,4-Di-Cl-phenyl– | gelb |
| 22 | 4-$NH_2$-2-Cl | 4-Cl-3-CONH– | 2,4,5-Tri-Cl-phenyl | gelb |
| 23 | 4-$NH_2$-2-Cl | 4-Cl-3-CONH– | 3-Trifluormethyl-4-chlor-phenyl– | gelb |
| 24 | 4-$NH_2$-2-Cl | 4-Cl-3-CONH– | 2-$CH_3$-3-Cl-phenyl– | gelb |
| 25 | 4-$NH_2$-2-Cl | 4-Cl-3-CONH– | 2-$CH_3$-5-Cl-phenyl– | gelb |
| 26 | 4-$NH_2$-2-Cl– | 2-$CH_3$-4-CONH– | 4-Cl-phenyl– | gelb |
| 27 | 4-$NH_2$-2,5-Di-Cl | 4-Cl-3-CONH– | 2,4-Di-Cl-phenyl– | gelb |
| 28 | 4-$NH_2$-2-$CH_3$– | 4-CONH– | 3,4-Di-Cl-phenyl– | grünstichig gelb |
| 29 | 4-$NH_2$-2-$CH_3$– | 4-Cl-3-CONH– | 2,4-Di-Cl-phenyl– | gelb |
| 30 | 4-$NH_2$-2-$CH_3$– | 4-Cl-3-CONH– | 2,4,5-Tri-Cl-phenyl | orange |
| 31 | 4-$NH_2$-2-$CH_3$– | 4-Cl-3-CONH– | 2-$CH_3$-3-Cl-phenyl– | gelb |
| 32 | 4-$NH_2$-2-$CH_3$– | 4-Cl-3-CONH– | 2-$CH_3$-5-Cl-phenyl– | orange |
| 33 | 4-$NH_2$-2,5-Di-$CH_3$ | 4-Cl-3-CONH– | 2,4-Di-Cl-phenyl– | gelb |
| 34 | 4-$NH_2$-2-$OCH_3$ | 4-CONH– | 3,4-Di-Cl-phenyl– | orange |
| 35 | 4-$NH_2$-2-$OCH_3$ | 4-Cl-3-CONH– | 2,4-Di-Cl-phenyl– | gelb |
| 36 | 4-$NH_2$-2-$OCH_3$ | 4-Cl-3-CONH– | 2,4,5-Tri-Cl-phenyl– | orange |
| 37 | 4-$NH_2$-2-$OCH_3$ | 3-$CH_3$-4-CONH– | 4-Cl-phenyl– | gelb |
| 38 | 4-$NH_2$-2-$OCH_3$ | 4-Cl-3-CONH– | 2-$CH_3$-3-Cl-phenyl– | gelb |
| 39 | 4-$NH_2$-2-$OCH_3$ | 4-Cl-3-CONH– | 2-$CH_3$-5-Cl-phenyl– | gelb |
| 40 | 4-$NH_2$-2,5-Di-$OCH_3$ | 4-CONH– | 3,4-Di-Cl-phenyl– | braun |
| 41 | 4-$NH_2$-2,5-Di-$OCH_3$ | 4-Cl-3-OCNH– | 2,4-Di-Cl-phenyl– | orange |
| 42 | 4-$NH_2$-2,5-Di-$OCH_3$ | 4-Cl-3-CONH– | 2,4,5-Tri-Cl-phenyl– | orange |
| 43 | 4-$NH_2$-2,5-Di-$OCH_3$ | 3-$CH_3$-4-CONH– | 4-Cl-phenyl– | braun |
| 44 | 4-$NH_2$-2,5-Di-$OC_2H_5$– | 4-Cl-3-CONH– | 2,4-Di-Cl-phenyl– | braun |

Beispiel 45

Verwendet man in Beispiel 1 anstelle von 3,4,5,6-Tetrachlor-3,4,5,6-Tetrabrom-o-cyanbenzoesäure-methylester, dann erhält man ein Gelbpigment mit ähnlich guten Eigenschaften.

Beispiel 46

Verwendet man in Beispiel 1 anstelle des 3,4,5,6-Tetrachlor-o-cyanbenzoesäure-methylesters äquimolekulare Mengen 3,4,6-Trichlor-5-methoxy-o-cyanbenzoesäuremethylester, dann erhält man ein Gelbpigment, welches in Kunststoffe, Druckpasten und Farblacke eingearbeitet ähnlich gute Echtheiten aufweist.

Beispiel 47

13,0 g 3,4,5,6-Tetrachlorcyanbenzoesäure-methylester werden mit 43,2 ml 1-n-Natriummethylatlösung in Methanol zu einer klaren Lösung verrührt. Nun werden 13,7 g Chinazol-4-on-6-yl-azo-acetoacetyl-p-aminoanilid (fein gemahlen und gesiebt), 150 ml o-Dichlorbenzol und 25 ml Dimethylformamid zugesetzt und wie im Beispiel 1 weiterverfahren. Man erhält 22,3 g eines Gelbpigments, das nach einer der üblichen Methoden gemahlen zur Einarbeitung in Kunststoffen, Farblacken und Drucktinten verwendet werden kann. Die hergestellten Ausfärbungen zeichnen sich durch große Farbstärke und gute Migrationsechtheit aus.

Beispiel 48—51

Verwendet man im Beispiel 47 anstelle des 13,7 g Chinazol-4-on-6-yl-azo-acetoacetyl-p-aminoanilid äquimolekulare Mengen

48 Benzimidazolon-5-yl-azo-acetoacetyl-p-aminoanilid
49 6-Chlobenzimidazolon-5-yl-azo-acetoacetyl-p-aminoanilid
50 6-Methylbenzimidazolon-5-yl-azo-acetoacetyl-p-aminoanilid
51 4-Methylchinol-2-on-7-yl-azo-acetoacetyl-p-aminoanilid

dann erhält man Gelbpigmente mit ähnlich guten Eigenschaften.

Beispiel 52

13,0 g 3,4,5,6-Tetrachlorcyanbenzoesäure-methylester werden, wie im Beispiel 47 beschrieben, zu einer Lösung des Natriumsalzes des 3,3-Dimethoxy-4,5,6,7-tetrachlorisoindolin-1-ons verrührt. Nach dem Eintragen von 17,8 g fein gemahlenem und gesiebtem 4-(4'-Chlorbenzoylamido)-phenylazo-acetoacetyl-2-chlor-4-amino-anilid und 200 ml o-Dichlorbenzol wird bei einer Badtemperatur von 120° innert einer Stunde unter Abdestillieren von Methanol die Innentemperatur auf 100° erhöht und 1 Stunde gehalten, wobei sich das Natriumsalz des Pigments abscheidet. Nun wird mit 15 ml Eisessig angesäuert und die Temperatur für 2 Stunden auf 140—150° erhöht. Das unlösliche Pigment wird bei 120° abfiltriert und mit Methanol, Aceton und Wasser gewaschen. Nach dem Trocknen erhält man 25 g eines Gelbpigments, das in dieser Form oder nach einer der üblichen Methoden gemahlen zur Herstellung von Farblacken und Drucktinten und zur Färbung von Kunststoffen verwendet wird. Die damit erhaltenen Gelbfärbungen zeichnen sich durch hervorragende Echtheiten aus.

In den nachfolgenden Beispielen 53 bis 118 wird das in Beispiel 52 verwendete 4-(4'-Chlorbenzoylamido)-phenylazo-acetoacetyl-2-chlor-4-aminoanilid durch Verbindungen der allgemeinen Formel

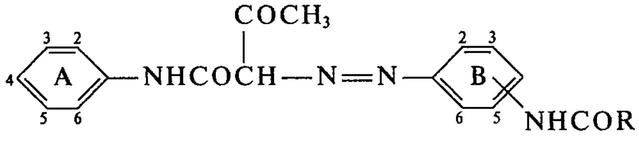

ersetzt.

| Nr. | A | B | R | Nuance |
|---|---|---|---|---|
| 53 | 3-$NH_2$– | 3-$NH_2$– | 4-Cl-phenyl | grünstichig gelb |
| 54 | 3-$NH_2$– | 3-$NH_2$-6-$CH_3$ | 4-Cl-phenyl- | grünstichig gelb |
| 55 | 3-$NH_2$– | 4-$NH_2$– | 4-Cl-phenyl– | rotstichig gelb |
| 56 | 3-$NH_2$-6-Cl– | 4-$NH_2$– | 4-Cl-phenyl– | gelb |
| 57 | 3-$NH_2$– | 4-$NH_2$-3-$CH_3$ | 4-Cl-phenyl– | gelb |
| 58 | 3-$NH_2$– | 4-$NH_2$-2,5-Di-$OCH_3$– | phenyl– | orange |
| 59 | 3-$NH_2$-6-$CH_3$ | 4-$NH_2$– | 4-Chlorphenyl– | gelb |
| 60 | 3-$NH_2$– | 4-$NH_2$-2,5-Di-Cl– | 4-Chlorphenyl– | grünstichig gelb |
| 61 | 4-$NH_2$– | 3-$NH_2$– | –$CH_3$ | gelb |
| 62 | 4-$NH_2$– | 4-$NH_2$– | –$CH_3$ | gelb |
| 63 | 4-$NH_2$– | 4-$NH_2$-3-Cl– | –$CH_3$ | grünstichig gelb |
| 64 | 4-$NH_2$– | 4-$NH_2$-3-$CH_3$– | –$CH_3$ | gelb |
| 65 | 4-$NH_2$– | 4-$NH_2$-3-$OCH_3$– | –$CH_3$ | gelb |
| 66 | 4-$NH_2$-2-Cl– | 4-$NH_2$-3-Cl | –$CH_3$ | gelb |
| 67 | 4-$NH_2$-2-Cl– | 4-$NH_2$-3-$CH_3$– | –$CH_3$ | gelb |
| 68 | 4-$NH_2$-2-$CH_3$– | 4-$NH_2$-3-Cl– | –$CH_3$ | gelb |
| 69 | 4-$NH_2$-2-$CH_3$– | 4-$NH_2$-3-$CH_3$– | –$CH_3$ | gelb |
| 70 | 4-$NH_2$-2-$CH_3$– | 4-$NH_2$-3-$OCH_3$– | –$CH_3$ | gelb |
| 71 | 4-$NH_2$-2-$OCH_3$– | 4-$NH_2$-3-Cl– | –$CH_3$ | orange |
| 72 | 4-$NH_2$-2-$OCH_3$– | 4-$NH_2$-3-$CH_3$– | –$CH_3$ | orange |
| 73 | 4-$NH_2$-2-$OCH_3$– | 4-$NH_2$-3-$OCH_3$– | –$CH_3$ | orange |
| 74 | 4-$NH_2$– | 3-$NH_2$– | 4-Chlorphenyl– | gelb |
| 75 | 4-$NH_2$– | 3-$NH_2$-6-Cl– | 4-Chlorphenyl– | gelb |
| 76 | 4-$NH_2$– | 3-$NH_2$-6-$CH_3$– | 4-Chlorphenyl– | gelb |
| 77 | 4-$NH_2$-2-Cl– | 3-$NH_2$– | 4-Chlorphenyl– | gelb |
| 78 | 4-$NH_2$-2-Cl– | 3-$NH_2$-6-Cl– | 4-Chlorphenyl– | gelb |
| 79 | 4-$NH_2$-2-Cl– | 3-$NH_2$-6-$CH_3$– | 4-Chlorphenyl– | gelb |
| 80 | 4-$NH_2$-2-Cl– | 3-$NH_2$-4-$CH_3$– | 4-Chlorphenyl– | gelb |
| 81 | 4-$NH_2$-2-$CH_3$– | 3-$NH_2$– | 4-Chlorphenyl– | grünstichig gelb |
| 82 | 4-$NH_2$-2-$CH_3$– | 3-$NH_2$-6-Cl– | 4-Chlorphenyl– | gelb |
| 83 | 4-$NH_2$-2-$CH_3$– | 3-$NH_2$-6-$CH_3$– | 4-Chlorphenyl– | grünstichig gelb |

Fortsetzung

| Nr. | A | B | R | Nuance |
|---|---|---|---|---|
| 84 | 4-$NH_2$-2-$CH_3$– | 3-$NH_2$-4-$CH_3$– | 4-Chlorphenyl– | gelbstichig orange |
| 85 | 4-$NH_2$-2-$OCH_3$– | 3-$NH_2$– | 4-Chlorphenyl– | gelb |
| 86 | 4-$NH_2$-2-$OCH_3$– | 3-$NH_2$-6-$CH_3$– | 4-Chlorphenyl– | orange |
| 87 | 4-$NH_2$-2-$OCH_3$– | 3-$NH_2$-4-$CH_3$– | 4-Chlorphenyl– | orange |
| 88 | 4-$NH_2$-2,5-Di-$OCH_3$– | 3-$NH_2$– | 4-Chlorphenyl– | orange |
| 89 | 4-$NH_2$-2,5-Di-$OCH_3$– | 3-$NH_2$-6-Cl– | 4-Chlorphenyl– | rot |
| 90 | 4-$NH_2$-2,5-Di-$OCH_3$– | 3-$NH_2$-6-$CH_3$– | 4-Chlorphenyl– | braun |
| 91 | 4-$NH_2$-2,5-Di-$OCH_3$– | 3-$NH_2$-4-$CH_3$– | 4-Chlorphenyl– | orange |
| 92 | 4-$NH_2$– | 4-$NH_2$– | 4-Chlorphenyl– | gelb |
| 93 | 4-$NH_2$– | 4-$NH_2$– | 2,4-Di-Cl-phenyl– | orange |
| 94 | 4-$NH_2$– | 4-$NH_2$-3-Cl– | 4-Chlorphenyl– | gelb |
| 95 | 4-$NH_2$– | 4-$NH_2$-3-Cl– | 2,4-Di-Cl-phenyl– | gelb |
| 96 | 4-$NH_2$– | 4-$NH_2$-2,5-Di-Cl– | 4-Chlorphenyl– | gelb |
| 97 | 4-$NH_2$– | 4-$NH_2$-3-$CH_3$– | 4-Chlorphenyl– | grünstichig gelb |
| 98 | 4-$NH_2$– | 4-$NH_2$-2,5-Di-$OCH_3$– | Phenyl– | orange |
| 99 | 4-$NH_2$-2-Cl– | 4-$NH_2$– | 2,4-Di-Cl-phenyl– | gelb |
| 100 | 4-$NH_2$-2-Cl– | 4-$NH_2$-3-Cl– | 4-Chlorphenyl– | gelb |
| 101 | 4-$NH_2$-2-Cl– | 4-$NH_2$-3-Cl– | 4-Chlorphenyl– | gelb |
| 102 | 4-$NH_2$-2-Cl– | 4-$NH_2$-2,5-Di-Cl– | 4-Chlorphenyl– | gelb |
| 103 | 4-$NH_2$-2-Cl– | 4-$NH_2$-3-$CH_3$– | 4-Chlorphenyl– | gelb |
| 104 | 4-$NH_2$-2-Cl– | 4-$NH_2$-3-$OCH_3$– | 4-Chlorphenyl– | orange |
| 105 | 4-$NH_2$-2-$CH_3$– | 4-$NH_2$– | 4-Chlorphenyl– | gelb |
| 106 | 4-$NH_2$-2-$CH_3$– | 4-$NH_2$-3-Cl– | 4-Chlorphenyl– | gelb |
| 107 | 4-$NH_2$-2-$CH_3$– | 4-$NH_2$-2,5-di-Cl– | 4-Chlorphenyl– | rotstichig gelb |
| 108 | 4-$NH_2$-2-$CH_3$– | 4-$NH_2$-3-$CH_3$– | 4-Chlorphenyl– | gelb |
| 109 | 4-$NH_2$-2-$CH_3$– | 4-$NH_2$-3-$OCH_3$– | 4-Chlorphenyl– | orange |
| 110 | 4-$NH_2$-2-$OCH_3$– | 4-$NH_2$-3-Cl– | 4-Chlorphenyl– | orange |
| 111 | 4-$NH_2$-2-$OCH_3$– | 4-$NH_2$-2,5-di-Cl– | 4-Chlorphenyl– | orange |
| 112 | 4-$NH_2$-2-$OCH_3$– | 4-$NH_2$-3-$CH_3$– | 4-Chlorphenyl– | orange |
| 113 | 4-$NH_2$-2-$OCH_3$– | 4-$NH_2$-3-$OCH_3$– | 4-Chlorphenyl– | gelb |

Fortsetzung

| Nr. | A | B | R | Nuance |
|---|---|---|---|---|
| 114 | 4-$NH_2$-2-$OCH_3$– | 4-$NH_2$-2,5-di-$OC_2H_5$– | Phenyl– | orange |
| 115 | 4-$NH_2$-2,5-di-$OCH_3$– | 4-$NH_2$-3-Cl– | 4-Chlorphenyl– | orange |
| 116 | 4-$NH_2$-2,5-di-$OCH_3$– | 4-$NH_2$-2,5-di-Cl– | 4-Chlorphenyl– | rot |
| 117 | 4-$NH_2$-2,5-di-$OCH_3$– | 4-$NH_2$-3-$OCH_3$– | 4-Chlorphenyl– | rot |
| 118 | 4-$NH_2$-2,5-di-$OCH_3$– | 4-$NH_2$-2,5-di-$OCH_3$– | Phenyl– | rot |

Beispiel 119

Verfährt man wie in Beispiel 52 angegeben, setzt aber anstelle der 17,8 g 4-(4'-Chlorbenzoylamido)-phenylazo-acetoacetyl-2-chlor-4-aminoanilid 13,7 g 3,4-Dichlorphenylazo-acetoacetyl-p-aminoanilid ein, dann erhält man 22 g eines Gelbpigments, das tel quel zur Herstellung von Drucktinten und Farblacken verwendet werden kann. Die damit hergestellten Färbungen zeichnen sich durch hervorragende Licht- und Wetterechtheit aus.

In den nachfolgenden Beispielen 120 bis 139 wird das in Beispiel 119 verwendete 3,4-Dichlorphenyl-azo-acetoacetyl-p-aminoanilid durch Verbindungen der allgemeinen Formel

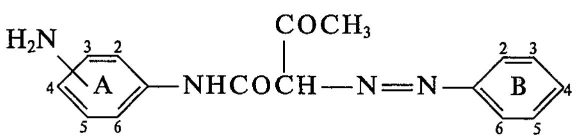

ersetzt.

| Nr. | A | B | Nuance |
|---|---|---|---|
| 120 | 3-$NH_2$– | 3,4-Dichlor– | grünstichig gelb |
| 121 | 3-$NH_2$-6-chlor | 3,4-Dichlor– | grünstichig gelb |
| 122 | 4-$NH_2$– | 4-Chlor– | gelb |
| 123 | 4-$NH_2$– | 2,4-Dichlor– | gelb |
| 124 | 4-$NH_2$– | 2,4,5-Trichlor– | gelb |
| 125 | 4-$NH_2$-2-chlor | 4-Chlor– | gelb |
| 126 | 4-$NH_2$-2-chlor– | 2,4-Dichlor | gelb |
| 127 | 4-$NH_2$-2-chlor– | 2,5-Dichlor– | gelb |
| 128 | 4-$NH_2$-2-chlor– | 3,4-Dichlor– | gelb |
| 129 | 4-$NH_2$-2-chlor– | 3-Trifluormethyl-4-chlor– | gelb |
| 130 | 4-$NH_2$-2-chlor– | 2,4,5-Trichlor– | gelb |
| 131 | 4-$NH_2$-2-chlor– | 2,4,6-Trichlor– | gelb |
| 132 | 4-$NH_2$-2-chlor– | 2,4-Dimethyl– | gelb |
| 133 | 4-$NH_2$-2-chlor– | 2,5-Dimethoxy-4-chlor– | orange |
| 134 | 4-$NH_2$-2-methyl– | 2,4-Dichlor– | gelb |
| 135 | 4-$NH_2$-2-methyl– | 3,4-Dichlor– | gelb |
| 136 | 4-$NH_2$-2-methyl– | 2,4,5-Trichlor– | orange |
| 137 | 4-$NH_2$-2-methoxy– | 2,5-Dimethoxy-4-Cl– | rotstichig orange |
| 138 | 4-$NH_2$-2,5-dimethoxy– | 4-Chlor– | orange |
| 139 | 4-$NH_2$-2,5-dimethoxy– | 3,4-Dichlor– | orange |

## Beispiel 140

3,15 g 3-Chlor-4-(2',4'-dichlorbenzoyl]-amido-anilin werden in 100 ml Eisessig heiß gelöst und durch Zugabe von 3,5 ml conc. Salzsäure das Chlorhydrat ausgefällt. Nun wird auf 0—5° abgekühlt und mit 2,5 ml 4-n-Natriumnitrit-Lösung diazotiert.

4,6 g 3-[4-Acetoacetylamido-phenylimino)-1-oxo-4,5,6,7-tetrachlor-isoindolin (hergestellt durch Behandlung einer feinen Suspension von 3-(4-Aminophenylimino)-1-oxo-4,5,6,7-tetrachlorisoindolin in Eisessig mit Diketen bei 50—55°) werden unter Zusatz von 2 ml conc. Natronlauge in 100 ml Methanol gelöst, durch Zugabe von 100 g Eis abgekühlt und mit 10 g Natriumacetat crist. versetzt.

In diese Lösung läßt man die obige Diazolösung laufen. Die entstehende Pigmentsuspension wird auf 70° aufgeheizt, abfiltriert, mit Methanol und Wasser gewaschen und im Vakuum getrocknet. Es werden 7,3 g Rohpigment erhalten. Diese werden mit 75 ml o-Dichlorbenzol 2¹/₂ Std. bei 170—175° gerührt. Nach dem Abkühlen auf 120° wird filtriert, mit Methanol, Aceton und heißem Wasser gewaschen und im Vakuum getrocknet. Es werden 6,4 g eines Gelbpigments erhalten, das mit dem im Beispiel 95 genannten identisch ist. Es kann tel quel verwendet werden.

## Beispiel 141

Verwendet man an Stelle der 3,15 g 3-Chlor-4-[2',4'-dichlorbenzoyl]-amido-anilin 3,15 g 3'-Amino-4'-chlorbenzoyl-2,4-dichloranilid und verfährt wie in Beispiel 140 angegeben, dann erhält man 6 g

desselben Gelbpigments, das in Beispiel 1 beschrieben ist.

### Beispiel 142 und 143

Diazotiert man 1,6 g 2,4-Dichloranilin bzw. 3,4-Dichloranilin in bekannter Weise und verfährt wie im Beispiel 140 angegeben, dann erhält man 5,1 g bzw. 6,4 g eines Gelbpigments, dessen Konstitution und Eigenschaften mit denjenigen des Pigments von Beispiel 123 bzw. 119 identisch sind.

### Beispiel 144

2 g des nach Beispiel 119 hergestellten Pigments werden mit 36 g Tonerdehydrat, 60 g Leinölfirnis von mittlerer Viskosität und 2 g Kobaltlinoleat auf dem Dreiwalzenstuhl angerieben. Die mit der entstehenden Farbpaste erzeugten gelben Drucke sind farbstark und hervorragend lichtecht.

### Beispiel 145

0,6 g des nach Beispiel 1 hergestellten Pigments werden mit Polyvinylchlorid, 33 g Dioctylphthalat, 2 g Dibutylzinndilaurat und 2 g Titandioxyd zusammengemischt und auf einem Walzenstuhl während 15 Minuten bei 160°C zu einer dünnen Folie verarbeitet. Die so erzeugte Gelbfärbung ist farbstark, migrations-, hitze- und lichtecht.

### Beispiel 146

10 g Titandioxyd und 2 g des nach Beispiel 52 hergestellten Pigments werden mit 88 g einer Mischung von 26,4 g Kokosalkydharz, 24,0 g Melamin-Formaldehydharz (50% Festkörpergehalt), 8,8 g Äthylenglykolmonomethyläther und 28,8 g Xylol während 48 Stunden in einer Kugelmühle vermahlen.

Wird dieser Lack auf eine Aluminiumfolie gespritzt, 30 Minuten bei Raumtemperatur vorgetrocknet und dann während 30 Minuten bei 120°C eingebrannt, dann erhält man eine Gelblackierung, die sich bei großer Farbstärke durch eine sehr gute Überlackier-, Licht- und Wetterechtheit auszeichnet.

**Patentansprüche**

1. Iminoisoindolinonfarbstoff der Formel

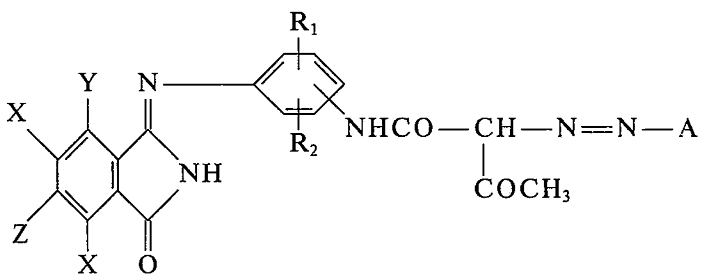

worin X Halogen, Y und Z Halogen, Alkoxy, enthaltend 1—4 C-Atome, oder Aryloxy, $R_1$ und $R_2$ Wasserstoff, Halogen, Alkyl, enthaltend 1—2 C-Atome, oder Alkoxy, enthaltend 1—2 C-Atome, und A Phenyl bedeuten, welches durch Halogen, Trifluormethyl, Alkyl, enthaltend 1—2 C-Atome, Alkoxy, enthaltend 1—2 C-Atome, oder eine Gruppe der Formeln $-CONHR_3$ oder $-NHCOR_4$ substituiert sein kann, worin $R_3$ Wasserstoff, Alkyl, enthaltend 1—2 C-Atome, oder gegebenenfalls durch Halogen, Methyl, Methoxy oder Trifluormethyl substituiertes Phenyl und $R_4$ gegebenenfalls durch Halogen, Methyl oder Methoxy substituiertes Phenyl oder Alkyl, enthaltend 1 oder 2 C-Atome, bedeuten, oder A einen heterocyclischen Rest darstellt.

2. Iminoisoindolinonfarbstoff gemäß Anspruch 1, gekennzeichnet durch die Formel

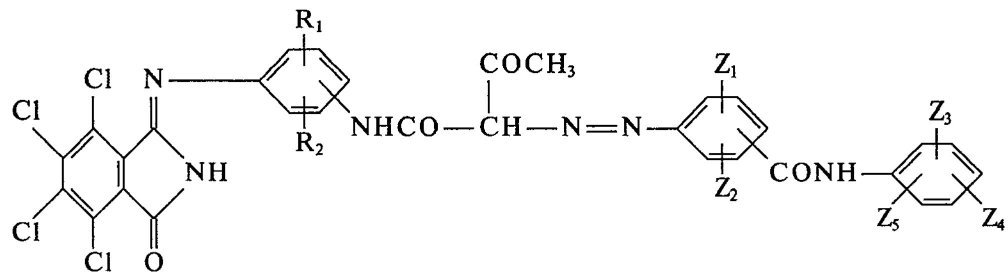

(2)

worin $R_1$ und $R_2$ die im Anspruch 1 angegebene Bedeutung haben und $Z_1$ bis $Z_5$ Wasserstoff, Halogen oder Methyl bedeuten, einer der Substituenten $Z_1$ und $Z_2$ auch Methoxy und höchstens zwei der Substituenten $Z_3$–$Z_5$ Trifluormethyl oder Methoxy sein können.

3. Iminoisoindolinonfarbstoff gemäß Anspruch 2, gekennzeichnet durch die Formel

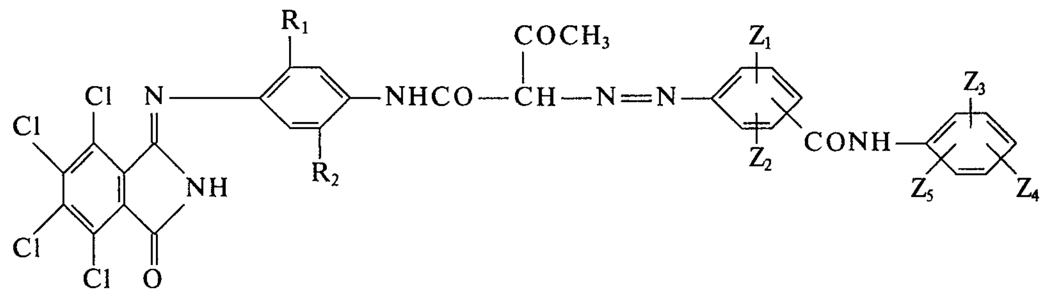

worin $R_1$ und $R_2$ die im Anspruch 1 und $Z_1$ bis $Z_5$ die im Anspruch 2 angegebene Bedeutung haben.

4. Iminoisoindolinonfarbstoff gemäß Anspruch 1, gekennzeichnet durch die Formel

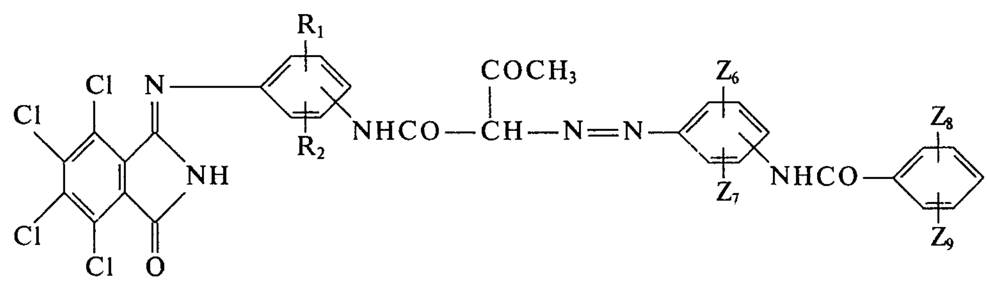

worin $R_1$ und $R_2$ die im Anspruch 1 angegebene Bedeutung haben, $Z_6$ und $Z_7$ Wasserstoff, Halogen, Alkyl, enthaltend 1–2 C-Atome, oder Alkoxy, enthaltend 1 bis 2 C-Atome, und $Z_8$ und $Z_9$ Wasserstoff, Halogen, Methyl oder Methoxy bedeuten.

5. Iminoisoindolinonfarbstoff gemäß Anspruch 4, gekennzeichnet durch die Formel

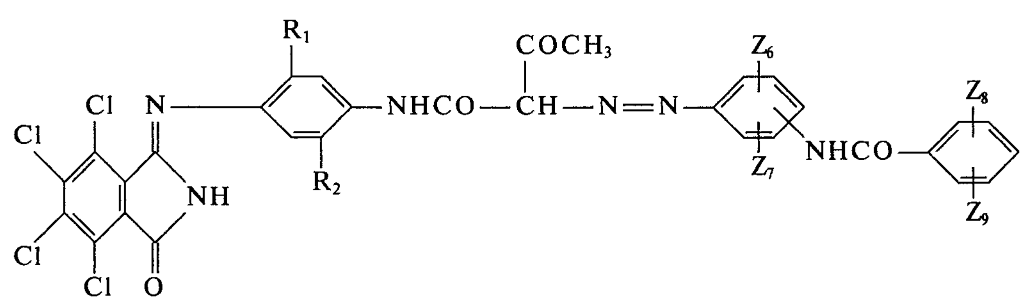

worin $R_1$ und $R_2$ die im Anspruch 1 und $Z_6$ bis $Z_9$ die im Anspruch 4 angegebene Bedeutung haben.

6. Iminoisoindolinonfarbstoff gemäß Anspruch 1, gekennzeichnet durch die Formel

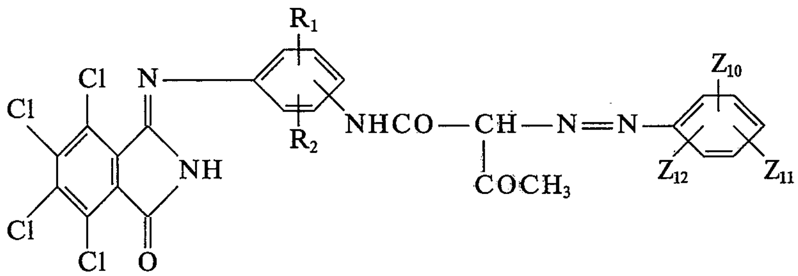

(6)

worin $R_1$ und $R_2$ die im Anspruch 1 angegebene Bedeutung haben und $Z_{10}$ bis $Z_{12}$ Wasserstoff, Halogen, Methyl, Trifluormethyl oder Methoxy bedeuten, wobei höchstens zwei der Substituenten $Z_{10}$ bis $Z_{12}$ Trifluormethyl oder Methoxy sein können.

7. Iminoisoindolinonfarbstoff gemäß Anspruch 6, gekennzeichnet durch die Formel

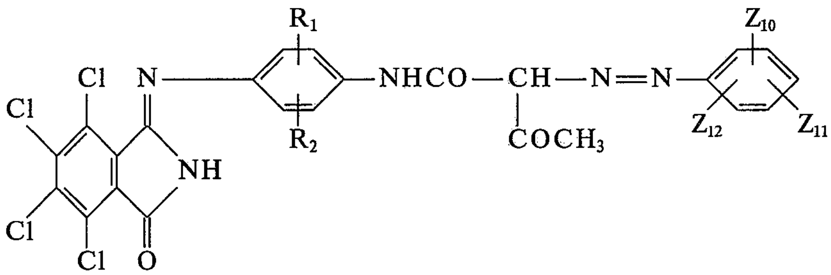

worin $R_1$, $R_2$ und $Z_{10}$ bis $Z_{12}$ die im Anspruch 6 angegebene Bedeutung haben.

8. Verfahren zur Herstellung des Iminoisoindolinonfarbstoffs gemäß Anspruch 1, dadurch gekennzeichnet, daß man ein Mol eines Isoindolinons der Formel

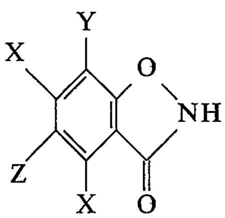

worin X, Y und Z die im Anspruch 1 angegebene Bedeutung haben und Q eine Gruppe der Formel

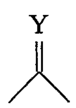

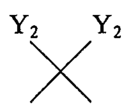

bedeutet, worin $Y_1$ für eine Imino- oder Thiogruppe und $Y_2$ für Halogen, Alkoxy, enthaltend 1–4 C-Atome, oder eine sekundäre Aminogruppe stehen, mit einem Mol der Formel

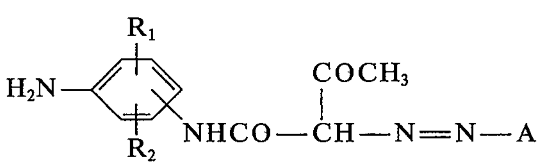

worin $R_1$, $R_2$ und A die im Anspruch 1 angegebene Bedeutung haben, kondensiert.

9. Verfahren zur Herstellung des Iminoisoindolinonfarbstoffes gemäß Anspruch 1, dadurch gekennzeichnet, daß man ein Mol eines Amins der Formel

$ANH_2$

diazotiert und mit einem Mol einer Verbindung der Formel

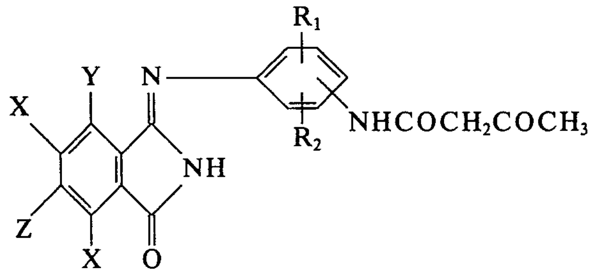

worin A, X, Y, Z, $R_1$ und $R_2$ die im Anspruch 1 angegebene Bedeutung haben, kuppelt.

10. Verwendung des Farbstoffs gemäß Anspruch 1 zum Pigmentieren von hochmolekularem organischem Material.

11. Hochmolekulares organisches Material, enthaltend einen Farbstoff gemäß Anspruch 1.

**Claims**

1. An iminoisoindolinone pigment of the formula

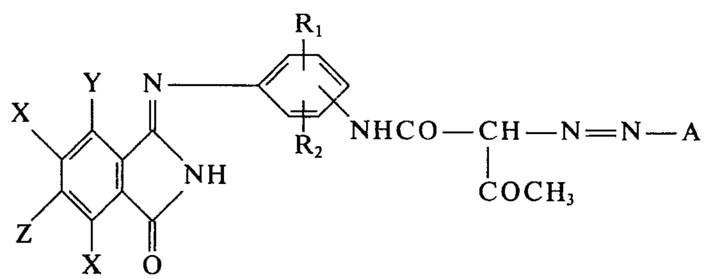

wherein X is halogen, Y and Z are halogen, $C_1-C_4$ alkoxy, or aryloxy, $R_1$ and $R_2$ are hydrogen, halogen, $C_1-C_2$alkyl or $C_1-C_2$alkoxy, and A is phenyl which can be substituted by halogen, trifluoromethyl, $C_1-C_2$alkyl, $C_1-C_2$alkoxy, or by a group of the formula $-CONHR_3$ or $-NHCOR_4$, wherein $R_3$ is hydrogen, $C_1-C_2$alkyl, or phenyl which can be substituted by halogen, methyl, methoxy or trifluoromethyl, and $R_4$ is phenyl which can be substituted by halogen, methyl or methoxy, or is $C_1-C_2$alkyl, or A is a heterocyclic radical.

2. An iminoisoindolinone pigment according to claim 1 of the formula

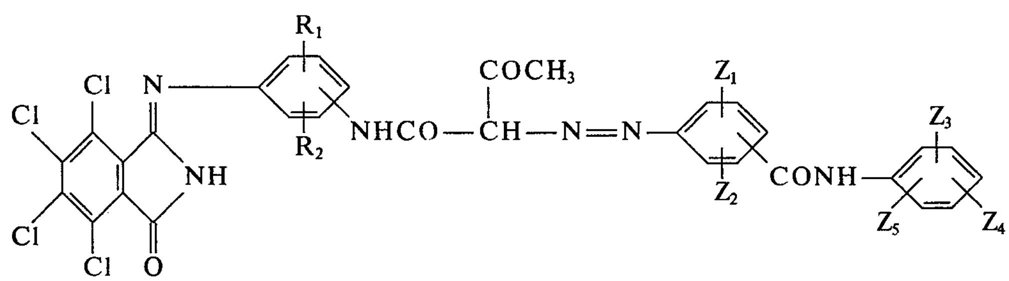

wherein $R_1$ and $R_2$ are as defined in claim 1, and $Z_1$ to $Z_5$ are hydrogen, halogen or methyl, whilst one of the substituents $Z_1$ and $Z_2$ can also be methoxy and not more than two of the substituents $Z_3$ to $Z_5$ can be trifluoromethyl or methoxy.

3. An iminoisoindolinone pigment according to claim 2 of the formula

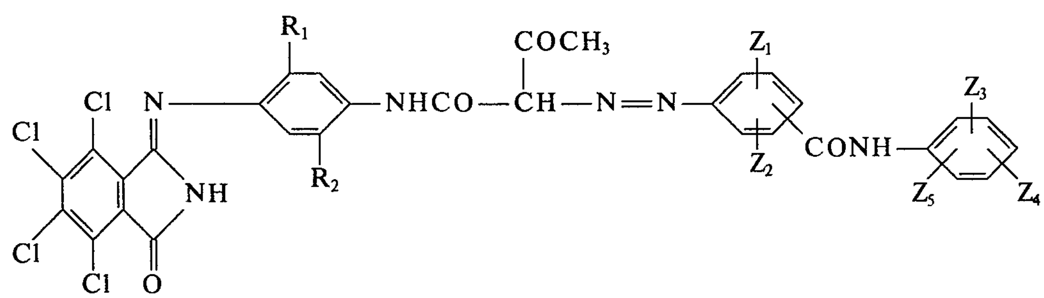

wherein $R_1$ and $R_2$ are as defined in claim 1 and $Z_1$ to $Z_5$ are as defined in claim 2.

4. An iminoisoindolinone pigment according to claim 1 of the formula

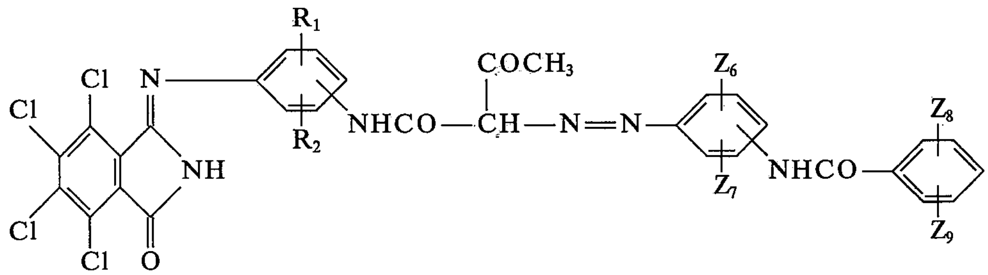

wherein $R_1$ and $R_2$ are as defined in claim 1, $Z_6$ and $Z_7$ are hydrogen, halogen, $C_1$—$C_2$ alkyl, $C_1$—$C_2$ alkoxy, and $Z_8$ and $Z_9$ are hydrogen, halogen, methyl or methoxy.

5. An iminoisoindolinone pigment according to claim 4 of the formula

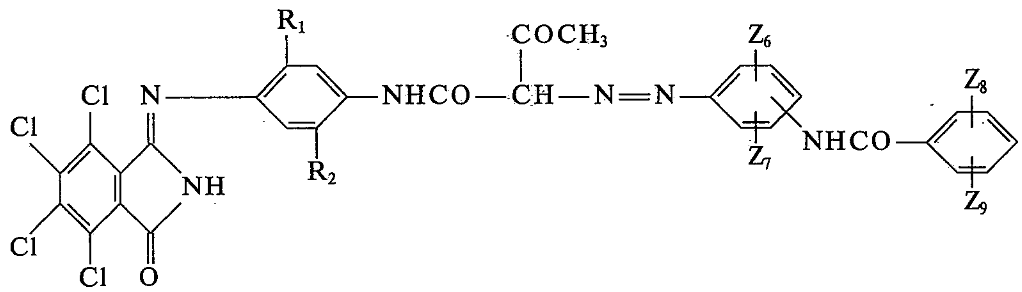

wherein $R_1$ and $R_2$ are as defined in claim 1, and $Z_6$ to $Z_9$ are as defined in claim 4.

6. An iminoisoindolinone pigment according to claim 1 of the formula

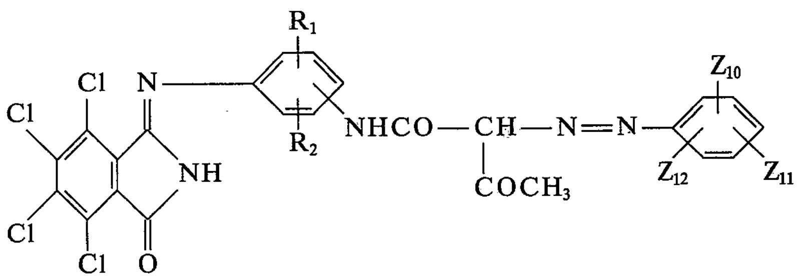

wherein $R_1$ and $R_2$ are as defined in claim 1, and $Z_{10}$ to $Z_{12}$ are hydrogen, halogen, methyl, trifluoromethyl or methoxy, with the proviso that not more than two of the substituents $Z_{10}$ to $Z_{12}$ can be trifluoromethyl or methoxy.

7. An iminoisoindolinone pigment according to claim 6 of the formula

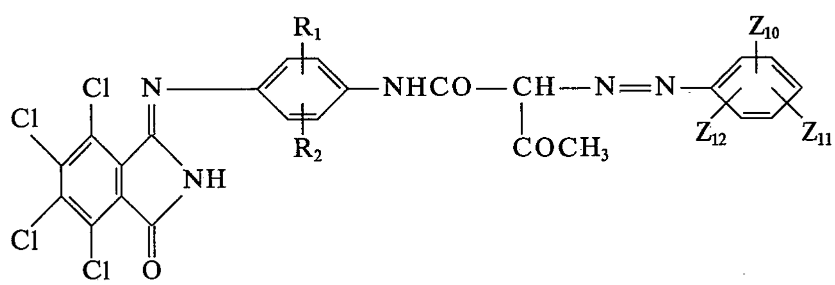

wherein $R_1$, $R_2$ and $Z_{10}$ to $Z_{12}$ are as defined in claim 6.

8. A process for the production of the iminoisoindolinone pigment according to claim 1, which process comprises condensing 1 mole of an isoindolinone of the formula

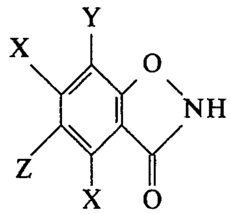

wherein X, Y and Z are as defined in claim 1 and Q is a group of the formula

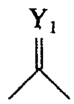

or

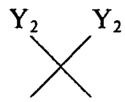

wherein $Y_1$ is an imino or thiol group and $Y_2$ is halogen, $C_1$—$C_4$ alkoxy, or a secondary amino group, with 1 mole of an amine of the formula

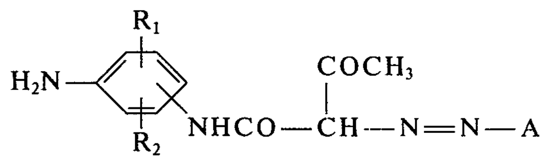

wherein $R_1$, $R_2$ and A are as defined in claim 1.

9. A process for the production of the iminoisoindolinone pigment according to claim 1, which process comprises diazotising 1 mole of an amine of the formula

$ANH_2$

and coupling the diazonium compound obtained with 1 mole of a compound of the formula

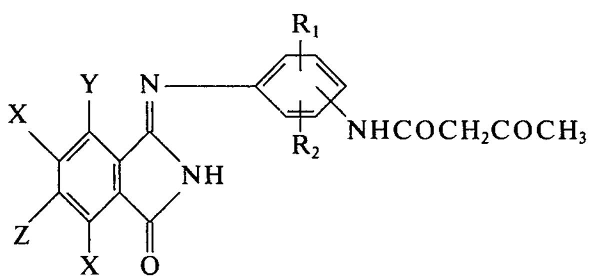

wherein A, X, Y, Z, $R_1$ and $R_2$ are as defined in claim 1.

10. Use of the pigment according to claim 1 for colouring organic material of high molecular weight.

11. Organic material of high molecular weight which contains a pigment according to claim 1.

**Revendications**

1. Colorants imino-iso-indolinoniques répondant à la formule:

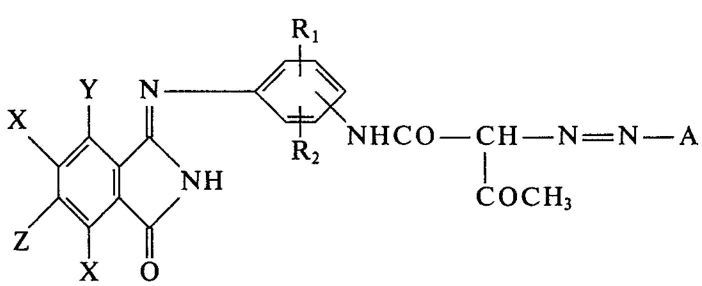

dans laquelle

X représente un halogène,
Y et Z représentent un halogène, un alcoxy contenant de 1 à 4 atomes de carbone ou un aryloxy,
$R_1$ et $R_2$ représentent chacun l'hydrogène, un halogène, un alkyle contenant 1 ou 2 atomes de carbone ou un alcoxy contenant 1 ou 2 atomes de carbone, et,
A représente un phényle éventuellement porteur d'un halogène, d'un trifluorométhyle, d'un alkyle contenant 1 ou 2 atomes de carbone, d'un alcoxy contenant 1 ou 2 atomes de carbone ou un radical répondant à l'une des formules:

$CONHR_3$ et $-NHCOR_4$

(où $R_3$ représente l'hydrogène, un alkyle contenant 1 ou 2 atomes de carbone ou un phényle éventuellement porteur d'un halogène, d'un méthyle, d'un méthoxy ou d'un trifluorométhyle, et $R_4$ représente un phényle éventuellement porteur d'un halogène, d'un méthyle ou d'un méthoxy, ou un alkyle contenant 1 ou 2 atomes de carbone), ou
A représente un radical hétérocyclique.

2. Colorants imino-iso-indolinoniques selon la revendication 1, caractérisés en ce qu'ils répondent à la formule:

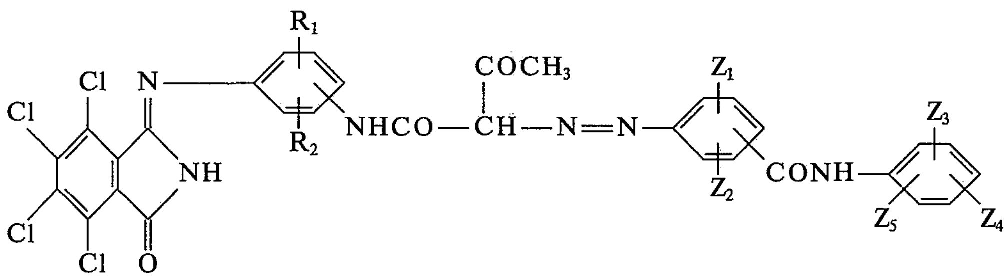

dans laquelle $R_1$ et $R_2$ ont les significations données à la revendication 1, et $Z_1$ à $Z_5$ représentent chacun l'hydrogène, un halogène ou un méthyle, l'un des substituants $Z_1$ et $Z_2$ pouvant également être un méthoxy, et au plus deux des substituants $Z_3$ à $Z_5$ pouvant être chacun un trifluorométhyle ou un méthoxy.

3. Colorants imino-iso-indolinoniques selon la revendication 2, caractérisés en ce qu'ils répondent à la formule:

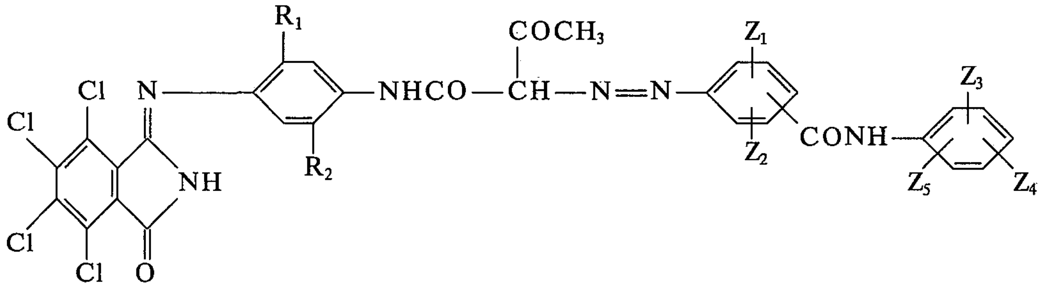

dans laquelle $R_1$ et $R_2$ ont les significations données à la revendication 1, et $Z_1$ à $Z_5$ ont les significations données à la revendication 2.

4. Colorants imino-iso-indolinoniques selon la revendication 1, caractérisés en ce qu'ils répondent à la formule:

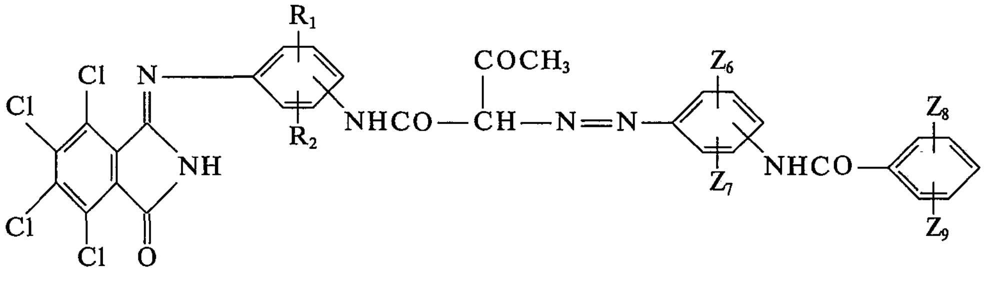

dans laquelle $R_1$ et $R_2$ ont les significations données à la revendication 1, $Z_6$ et $Z_7$ représentent chacun l'hydrogène, un halogène, un alkyle contenant 1 ou 2 atomes de carbone ou un alcoxy contenant 1 ou 2 atomes de carbone, et $Z_8$ et $Z_9$ représentent chacun l'hydrogène, un halogène, un méthyle ou un méthoxy.

5. Colorants imino-iso-indolinonques selon la revendication 4, caractérisés en ce qu'ils répondent à la formule:

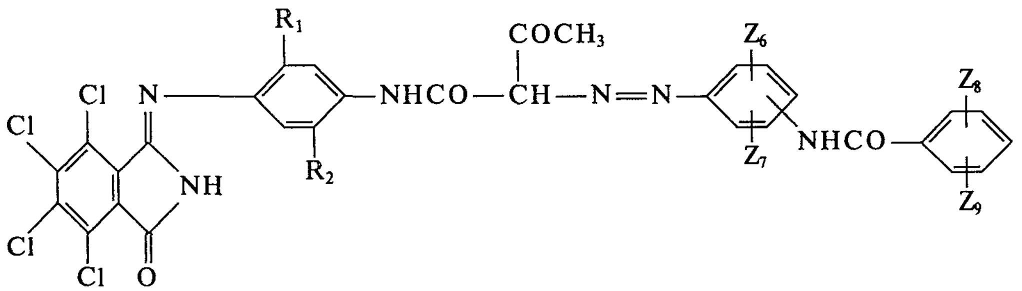

dans laquelle $R_1$ et $R_2$ ont les significations données à la revendication 1 et $Z_6$ à $Z_9$ ont les significations données à la revendication 4.

6. Colorants imino-iso-indolinoniques selon la revendication 1, caractérisés en ce qu'ils répondent à la formule:

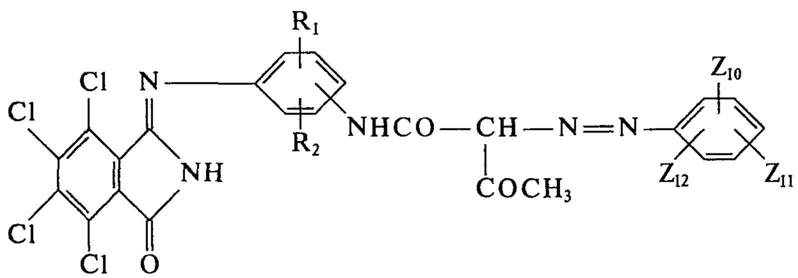

dans laquelle $R_1$ et $R_2$ ont les significations données à la revendication 1 et $Z_{10}$ à $Z_{12}$ représentent chacun l'hydrogène, un halogène, un méthyle, un trifluorométhyle ou un méthoxy, au plus deux des substituants $Z_{10}$ à $Z_{12}$ pouvant être chacun un trifluorométhyle ou un méthoxy.

7. Colorants imino-iso-indolinoniques selon la revendication 6, caractérisés en ce qu'ils répondent à la formule:

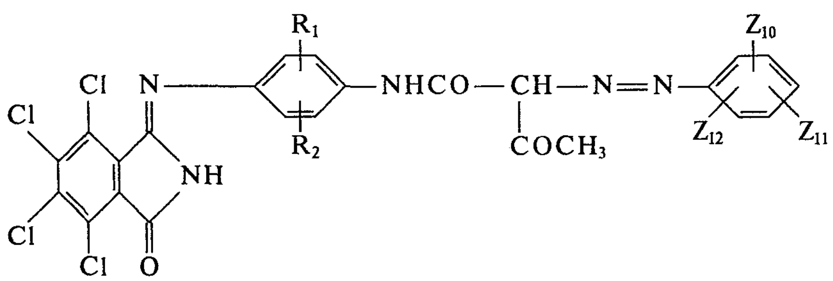

dans laquelle $R_1$, $R_2$ et $Z_{10}$ à $Z_{12}$ ont les significations données à la revendication 6.

8. Procédé de préparation des colorants imino-iso-indolinoniques selon la revendication 1, procédé caractérisé en ce qu'on condense 1 mole d'une iso-indolinone répondant à la formule:

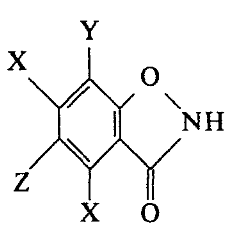

dans laquelle X, Y et Z ont les significations données à la revendication 1 et Q représente un radical

répondant à l'une des formules:

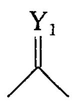

et

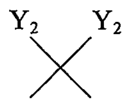

dans lesquelles $Y_1$ représente un radical imino ou thio et $Y_2$ représente un halogène, un alcoxy contenant de 1 à 4 atomes de carbone ou un radical amino secondaire, avec 1 mole d'une amine répondant à la formule:

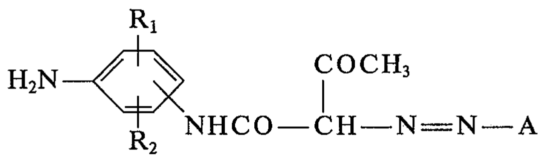

dans laquelle $R_1$, $R_2$ et A ont les significations données à la revendication 1.

9. Procédé de préparation des colorants imino-iso-indolinoniques selon la revendication 1, procédé caractérisé en ce qu'on diazote 1 mole d'une amine de formule

$$ANH_2$$

et on copule le diazoïque avec 1 mole d'un composé répondant à la formule:

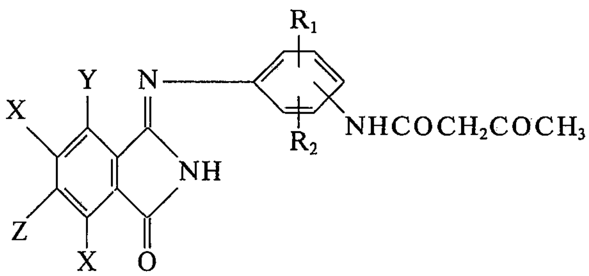

dans laquelle A, X, Y, Z, $R_1$ et $R_2$ ont les significations données à la revendication 1.

10. Application des colorants selon la revendication 1 à la pigmentation de matières organiques à haut poids moléculaire.

11. Matières organiques à haut poids moléculaire qui contiennent un colorant selon la revendication 1.